# EUROPEAN PATENT APPLICATION

(11) **EP 3 576 203 A1**
(43) Date of publication of application: **04.12.2019**
(21) Application number: 17894111.8
(22) Date of filing: 18.12.2017
(51) Int. Cl.: H01M 10/04, H01M 2/14, H01M 2/16, H01M 10/0585

(54) **PRODUCTION METHOD FOR LAYERED BATTERY**

(30) Priority: 26.01.2017 JP 2017012259
(71) Applicant: ENVISION AESC ENERGY DEVICES LTD., Sagamihara-shi Kanagawa 2520254 (JP)
(72) Inventor: YANAGISAWA Ryota, Sagamihara-shi Kanagawa 252-5298 (JP)
(74) Representative: Glawe, Delfs, Moll
(86) International application number: PCT/JP2017/045338
(87) International publication number: WO 2018/139106

(57) **Abstract**

There is provided a method for producing a laminated type battery including a separator and electrode sheets arranged in lamination through the separator, the method including subjecting a charged separator to a charge neutralization treatment to thereby reduce a charge voltage thereof, and laminating the separator having the reduced charge voltage on the electrode sheet.

## Description

### Technical Field

The present invention relates to a method for producing a laminated type battery.

### Background Art

Lithium-ion secondary batteries, since being high in the energy density and excellent in the charge and discharge cycle characteristic, are broadly used as power sources for small-size mobile devices such as cell phones and laptop computers. Further in recent years, in consideration of environmental problems and due to growing consciousness of energy saving, there has also been a growing demand for large-size batteries requiring a high capacity and a long life, for electric vehicles and hybrid electric vehicles and electric power storage fields.

The lithium-ion secondary batteries are generally constituted mainly of a positive electrode containing a positive electrode active material capable of intercalating and deintercalating lithium ions, a negative electrode containing a negative electrode active material capable of intercalating and deintercalating lithium ions, a separator to separate the positive electrode and the negative electrode, and a nonaqueous electrolyte solution.

The electrode structure of such lithium-ion secondary batteries comes mainly in a wound type and a laminated type, and for relatively large-size batteries, the laminated type is mainly adopted from the viewpoint of capacity, internal resistance, heat dissipation and the like.

The laminated type lithium-ion secondary batteries have a sheet-form positive electrode, a sheet-form negative electrode and a sheet-form separator, and in its production, the positive electrode, the negative electrode, and the separator are laminated such that the positive electrode and the negative electrode are arranged through the separator.

Patent Literature 1 discloses an invention having an object in which in production of a laminated type battery, a separator is placed suitably on a fixed position on a placing surface without injuring the separator. The invention, in a method of placing the separator (sheet) on a fixed position on a placing surface, involves impressing a voltage to electrodes installed on the opposite side to the separator with the placing surface interposed therebetween to thereby generate an electrostatic force between the electrodes and the separator and attracting the separator to the fixed position on the placing surface by the electrostatic force.

Patent Literature 2 discloses an invention having an object in which the invention is capable of responding to alterations in the size of a battery laminate and the electrostatic adsorbing power of the battery laminate on temporary fixation is sufficiently maintained. The invention is a laminating method of laminating a positive electrode sheet, a negative electrode sheet and a separator sheet,
the laminating method including: laminating a positive electrode sheet, a negative electrode sheet and a separator sheet on a laminating stage movable and formed from a dielectric;
irradiating the uppermost surface of the resultant laminate with charged particles to electrostatically adsorb one, to be then laminated on the laminate, of the positive electrode sheet, the negative electrode sheet and the separator sheet to the laminate; and
before the lamination, irradiating the laminating stage with charged particles to electrostatically adsorb the laminate to the laminating stage and suppressing positional shifts of the laminate with respect to the laminating stage in movement of the laminating stage.

### Citation List

### Patent Literature

Patent Literature 1: JP2014-186830A
Patent Literature 2: JP5588579B

### Summary of Invention

### Technical Problem

The laminating methods according to the related arts, when the electrostatic force becomes too large, have such fear that the lamination becomes difficult and the electrostatic breakdown of the separator is caused, and conversely when the electrostatic force is small, cannot sufficiently suppress the positional shift in laminating.

An object of the present invention is to provide a technology to solve the above problem, that is, to provide a method for producing a laminated type battery in which lamination is easy and product defects and the positional shift in laminating are suppressed.

### Solution to Problem

One aspect of the present invention provides a method for producing a laminated type battery comprising a separator and electrode sheets arranged in lamination through the separator, the method comprising:
subjecting a charged separator to a charge neutralization treatment to thereby reduce a charge voltage thereof; and
laminating the separator having the reduced charge voltage on the electrode sheet.

### Advantageous Effects of Invention

According to an exemplary embodiment, there can be provided a method for producing a laminated type battery in which lamination is easy and product defects and the positional shift in laminating are suppressed.

### Brief Description of Drawings

[Figure 1] Figure 1 is a schematic cross-sectional view to interpret one example of a basic constitution of a lithium-ion secondary battery.
[Figure 2] Figure 2 is a schematic cross-sectional view to interpret one example of a laminated lithium-ion secondary battery.
[Figure 3] Figure 3 is a view to interpret examples of bag-form separators.
[Figure 4] Figure 4 is a view to interpret another example of a laminated lithium-ion secondary battery, in which Figure 4A shows a front view thereof and Figure 4B shows a cross-sectional view taken on the position of A-A' in Figure 4A.

### Description of Embodiment

Hereinafter, an exemplary embodiment will be described.

First, a constitution example of a laminated type battery produced by a production method according to the exemplary embodiment will be described.

### (Constitution of a lithium-ion secondary battery)

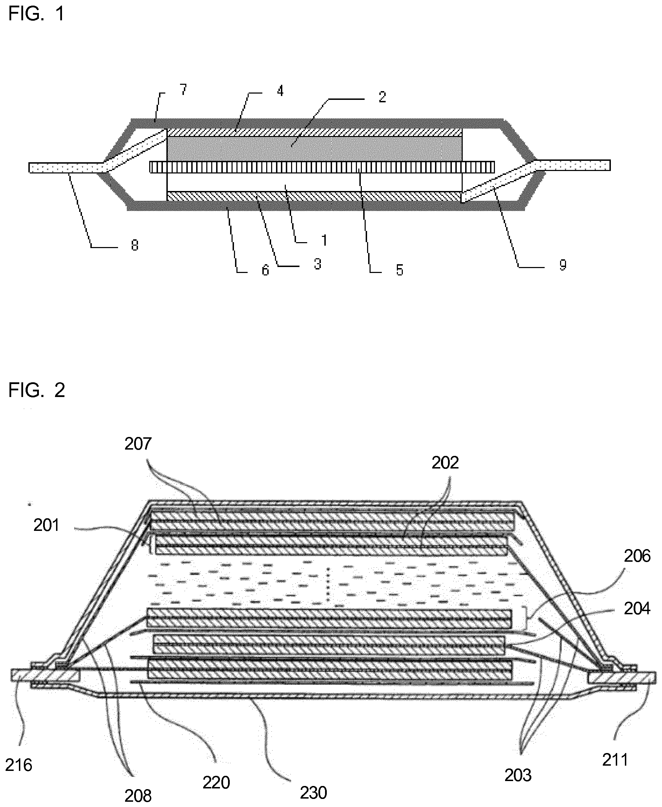

Figure 1 schematically shows one example of a basic constitution (a constitution having a pair of electrodes) of a lithium-ion secondary battery.

The lithium-ion secondary battery has a positive electrode composed of a positive electrode current collector 3 made of a metal such as an aluminum foil and a positive electrode active material layer 1 containing a positive electrode active material provided thereon, and a negative electrode composed of a negative electrode current collector 4 made of a metal such as a copper foil and a negative electrode active material layer 2 containing a negative electrode active material provided thereon. The positive electrode and the negative electrode are laminated through a separator 5 so that the positive electrode active material layer 1 and the negative electrode active material layer 2 face each other. The electrode pair is housed in a container formed of outer packages 6, 7 made of an aluminum laminate film. A positive electrode tab 9 is connected to the positive electrode current collector 3, and a negative electrode tab 8 is connected to the negative electrode current collector 4; and these tabs are led out outside the container. An electrolyte solution is injected and sealed in the container. The constitution may also be a structure in which an electrode group in which a plurality of electrode pairs are laminated is housed in a container.

Figure 2 schematically shows one example of a laminated lithium-ion secondary battery having an electrode laminate containing a plurality of electrode pairs.

The laminated lithium-ion secondary battery has the electrode laminate in which a positive electrode 201 and a negative electrode 206 are alternately laminated through a separator 220 in multi-layer, and the electrode laminate is accommodated with an electrolyte solution in an outer package case (container) 230 made of a flexible film. A positive electrode terminal 211 and a negative electrode terminal 216 are electrically connected to the electrode laminate, and parts of ends of the positive electrode terminal 211 and the negative electrode terminal 216 are led out outside the outer package case 230.

The positive electrode 201 is provided, on the front and back surfaces of a positive electrode current collector 203, with an applied portion (positive electrode active material layers) 202 made by applying and drying a slurry containing a positive electrode active material and an unapplied portion on which no slurry has been applied. The negative electrode is provided, on the front and back surfaces of a negative electrode current collector 208, with an applied portion (negative electrode active material layers) 207 made by applying and drying a slurry containing a negative electrode active material and an unapplied portion on which no slurry has been applied.

The positive electrode active material-unapplied portion of the positive electrode current collector is used as a positive electrode tab 203 to connect the positive electrode and the positive electrode terminal 211, and the negative electrode active material-unapplied portion of the negative electrode current collector is used as a negative electrode tab 208 to connect the negative electrode and the negative electrode terminal 216. A plurality of the positive electrode tabs 203 are collected on the positive electrode terminal 211 and the positive electrode tabs 203 are together connected with the positive electrode terminal 211 by ultrasonic welding or the like. A plurality of the negative electrode tabs 208 are collected on the negative electrode terminal 216 and the negative electrode tabs 208 are together connected with the negative electrode terminal 216 by ultrasonic welding or the like. One end of the positive electrode terminal 211 connected with the positive electrode tabs 203 is led out outside the outer package case 230, and one end of the negative electrode terminal 216 connected with the negative electrode tabs 208 is led out outside the outer package case 230. At the boundary portion 204 between the positive electrode active material-applied portion 202 and unapplied portion, an insulating member to prevent short-circuit with the negative electrode terminal is formed.

### (Separator)

As a separator to be used in the method for producing a laminated type battery according to the exemplary embodiment, a porous membrane, a woven fabric, a nonwoven fabric or the like can be used. The thickness of the separator is suitably several tens of micrometers, preferably 10 to 40 µm and more preferably 10 to 30 µm.

A material constituting the separator includes resins, glasses and ceramics, and examples thereof include resin-made porous membrane separators, glass nonwoven fabric separators and separators of resin-made nonwoven fabrics coated with a ceramic.

A resin constituting a separator of a porous membrane or the like includes polyamide resins such as aramid (aromatic polyamide), polyolefin resins such as polypropylene and polyethylene, polyester resins, acryl resins, styrene resins and nylon resins. Further as required, a separator may have a layer containing inorganic particles formed thereon, and the inorganic particles include insulating oxides, nitrides, sulfides and carbides, and examples thereof include ceramic materials such as titania (TiO₂) and alumina (Al₂O₃).

Among these materials, from the viewpoint that the separator has a sufficient chargeability, materials having a relative dielectric constant of 3 or higher are preferable, and materials having a relative dielectric constant of 3.5 or higher are more preferable; and from the viewpoint of handleability of charged separators and control of chargeability by charge neutralization, materials having a relative dielectric constant of 6 or lower are preferable, materials having a relative dielectric constant of 5 or lower are more preferable, and materials having a relative dielectric constant of 4 or lower are still more preferable.

Further from the viewpoint of heat resistance, as the material constituting the separator, preferable are polyamide resins such as aramid (aromatic polyamide), glass materials and ceramic materials; preferable are aramid separators and glass nonwoven fabric separators, and especially preferable are aramid separators.

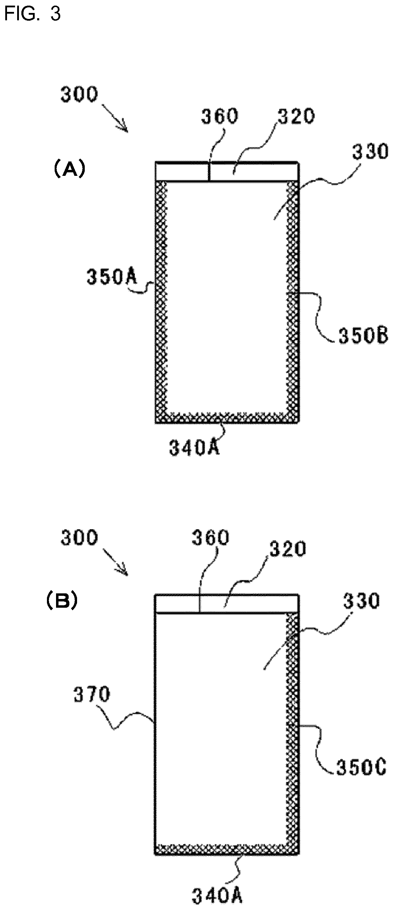

In the constitutions shown in Figure 1 and Figure 2, the separator used is one composed of one sheet-form member; but alternatively, for example, a bag-form separator having an electrode inserting port and made by bonding at least two sides as shown in Figure 3 may be used. Such a bag-form separator includes one described in International Publication No. WO2013/031936.

Figure 3 is a view to interpret examples of bag-form separators. Figure 3A shows a bag-form separator 300 in which the bag-form separator 300 has a bottom-side thermally fused portion 340A on the opposite side thereof to an electrode inserting port 360, and both-side thermally fused portions 350A, 350B, and the outer peripheral side of a second-face separator 330 at the electrode inserting port 360 is on the inner side of the outer peripheral side of a first-face separator 320 thereat. The first-face separator 320 and the second-face separator 330 are bonded through the bottom-side thermally fused portion 340A and the both-side thermally fused portions 350A, 350B. One of bonding portions of the bottom-side thermally fused portion 340A and the both-side thermally fused portions 350A, 350B may be made by folding one member which the first-face separator 320 and the second-face separator 330 are fabricated by folding. An electrode sheet is inserted in the bag-form separator, which can be then installed at a predetermined position.

A bag-form separator 300 shown in Figure 3B has a bottom-side thermally fused portion 340A on the opposite side thereof to an electrode inserting port 360, and a flank-side thermally fused portion 350C, wherein the thermally fused portions are formed by bonding only the two sides; and a first-face separator 320 and a second-face separator 330, on the flank-side 370, are not bonded through thermal fusion or the like, and are opened. One of the fused portion 340A and the thermally fused portion 350C may be made by folding one member which the first-face separator 320 and the second-face separator 330 are fabricated by folding.

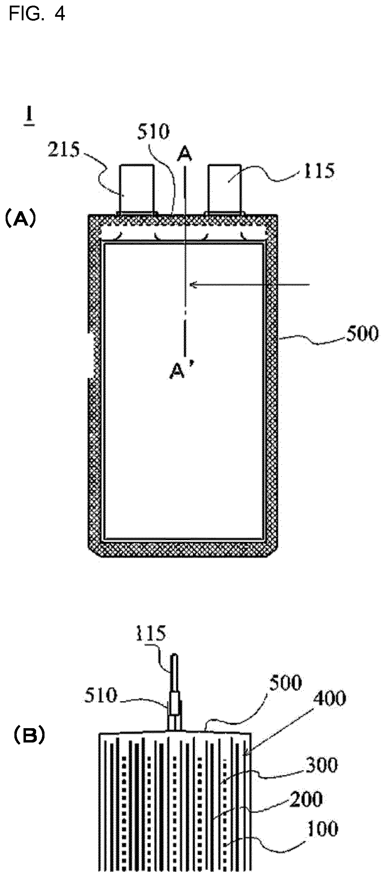

Figure 4 is a view to interpret one example of a laminated type battery sealed with a film-form outer package material (flexible film). Figure 4A shows a front view, and Figure 4B is a cross-sectional view taken on the position of A-A' of Figure 4A, in which the lamination direction is enlarged. In the laminated type battery 1, positive electrodes 100 and negative electrodes 200 form a laminate 400 through bag-form separators 300, and a positive electrode leading-out tab 115 and a negative electrode leading-out tab 215 are taken out in the same direction from the laminate 400. The positive electrode leading-out tab 115, and the negative electrode leading-out tab 215 connected to the negative electrodes 200 are taken out from a sealed part 510 of the film-form outer package material 500.

### (Laminating method)

Hereinafter, a method for laminating electrode sheets (positive electrode sheets, negative electrode sheets) and separators will be described. The positive electrode sheet and the negative electrode sheet can be formed as described later.

First, a roll-form positive electrode sheet, negative electrode sheet and separator are provided. Alternatively, these each may be in a laminated state in which these each have been processed into a predetermined size and laminated.

When the positive electrode sheet, the negative electrode sheet and the separator are provided, from the viewpoint of sufficiently charging the separator, the atmosphere is preferably a dry atmosphere, whose relative humidity (RH) is preferably 5% or lower and more preferably 1% or lower. When a lithium-ion secondary battery is produced as a laminated type battery, the atmosphere is preferably such a dry atmosphere, also from the viewpoint that moisture in the air leads to performance reduction and deterioration.

When the dielectric constant of the separator is relatively high, the separator sheet can be made to assume a charged state by a dry atmosphere during storage, by friction when the separator is unwound from a rolled state, or by friction when the separator is peeled off from a laminated state. For example, in the case of an aramid separator (a single layer of 15 µm in thickness, porosity: 65%), the charge voltage becomes 10 to 20 kV; and in the case of a glass nonwoven fabric separator (thickness: 20 µm, porosity: 70%), the charge voltage becomes 5 to 6 kV (measurement results by a static electricity meter, manufactured by Keyence Corp.).

Then, the charged separator is subjected to a charge neutralization treatment to reduce the charge voltage. The charge neutralization treatment of the separator can be carried out by using a usual ionizer (static eliminator).

The charge voltage of the separator after the charge neutralization treatment does not exceed preferably 10 kV and more preferably 5 kV. When the separator is excessively charged, there arises such fear that the electrostatic adsorption becomes too strong to position the separator to thereby make lamination difficult and to thereby cause damage due to electrostatic breakdown.

Further the charge voltage of the separator after the charge neutralization treatment is preferably at least 0.5 kV and more preferably at least 1 kV. When the separator is charged moderately, on positioning in laminating, the positional shift can be suppressed due to the electrostatic adsorption.

Here, the charge voltage of the separator (separator sheet) means an average of charge voltages at any 10 points in the separator. When the plane shape of the separator is rectangular or square, the average of charge voltages at the central point (intersection of two diagonal lines) and at any 9 points in its circumference can be taken as the charge voltage.

The separator having thus been subjected to the charge neutralization treatment is disposed on an electrode sheet (positive electrode sheet or negative electrode sheet) previously disposed on a laminating stage; and on the separator sheet, another electrode sheet (negative electrode sheet or positive electrode sheet) is laminated.

In the case of the separator being a sheet-form separator, when the separator is laminated on a negative electrode sheet, a positive electrode sheet is laminated on the separator; and when the separator is laminated on a positive electrode sheet, a negative electrode sheet is laminated on the separator. Then, on the laminated positive electrode sheet or negative electrode sheet, a separator is laminated. Then, on the separator, a positive electrode sheet or a negative electrode sheet is similarly laminated. A positive electrode sheet, a separator and a negative electrode sheet are repeatedly laminated in such a manner so that the separator is disposed between the positive electrode sheet and the negative electrode sheet, whereby an electrode laminate containing electrode pairs in a predetermined number can be formed.

In the case of the separator being a bag-form separator, when a positive electrode sheet is accommodated in the bag-form separator, the bag-form separator accommodating the positive electrode sheet is laminated on a negative electrode sheet, and another negative electrode sheet is laminated on the bag-form separator. Then, on the laminated negative electrode sheet, a bag-form sheet accommodating a positive electrode sheet is laminated. A negative electrode sheet and a bag-form separator accommodating a positive electrode sheet are alternately repeatedly laminated in such a manner, whereby an electrode laminate containing electrode pairs in a predetermined number can be formed.

When a negative electrode sheet is accommodated in the bag-form separator, the bag-form separator accommodating the negative electrode sheet is laminated on a positive electrode sheet, and another positive electrode sheet is laminated on the bag-form separator. Then, on the laminated positive electrode sheet, a bag-form separator accommodating a negative electrode sheet is laminated. A positive electrode sheet and a bag-form separator accommodating a negative electrode sheet are alternately repeatedly laminated in such a manner, whereby an electrode laminate containing electrode pairs in a predetermined number can be formed.

Since in such a lamination step, a separator having been subjected to charge neutralization treatment is used, positioning and lamination are prevented from becoming difficult due to too strong electrostatic adsorption and the separator is prevented from being damaged due to electrostatic breakdown. Further since the separator is moderately charged, while the positional shift can be suppressed by the electrostatic adsorption, positioning can easily be carried out.

An electrode sheet (positive electrode sheet or negative electrode sheet) and a separator each can be conveyed onto a laminating stage by a usual conveying device. An electrode sheet (or separator) can be laminated, for example, as follows: an electrode sheet (or separator) is held by vacuum adsorption or the like to a holding unit (for example, vacuum chuck) of the conveying device; the holding unit holding the electrode sheet (or separator) moves to above the laminating stage by a moving mechanism; the held electrode sheet (or separator) descends to the vicinity of the stage upper face or a separator (or electrode sheet) on the stage; and the vacuum is released (or as required, a gas is spouted) to peel the electrode sheet (or separator) off the holding unit to thereby laminate the electrode sheet (or separator).

The laminating stage may be installed with a sucking unit (for example, vacuum chuck). At least the upper face (face for a sheet to be mounted on) of the laminating stage is preferably composed of a dielectric. The stage itself may be formed of a dielectric material, or a dielectric layer may be laminated or coated thereon. The dielectric constituting the laminating stage includes various types of resin materials and inorganic materials, and there can be used, for example, silicone resins such as silicone rubber and inorganic oxides such as alumina.

For an obtained electrode laminate, as shown in Figure 2, positive electrode active material-unapplied portions (ends of positive electrode current collectors) of the positive electrode sheets are used as positive electrode tabs, and collected on a positive electrode terminal and mutually connected by ultrasonic welding or the like. Negative electrode active material-unapplied portions (ends of negative electrode current collectors) of the negative electrode sheets are used as negative electrode tabs, and collected on a negative electrode terminal and mutually connected by ultrasonic welding or the like.

### (Production process after the lamination step)

Following the formation step of the electrode laminate having been described hitherto, a laminated type battery can be formed as follows.

First, the electrode laminate is housed in an outer package container; and then, an electrolyte solution is charged and impregnated under vacuum. In order to make the electrolyte solution to sufficiently impregnate, the resultant electrode laminate, before being put in the vacuum state, may be left or pressurized for a certain time.

After the vacuum impregnation, an unfused opening part of the outer package is fused in a vacuum state to temporarily seal the part.

After the temporary sealing, the battery is preferably pressurized. The pressurization can promote impregnation of the electrolyte solution. The pressurization can be carried out by interposing the battery between a pair of pressing plates and apply a pressure from the outside of the container.

Then, a pre-charge is carried out in the temporarily sealed state. Charge and discharge may be repeated predetermined times. The pre-charged state is preferably maintained for a predetermined time. The pressure in pre-charging is not limited, and when pressurization has been carried out before the pre-charge, the pressure can be set at a pressure lower than a pressure in the pressurization before the pre-charge.

Then, the temporarily sealed part is opened for degassing. Thereafter, as required, vacuum impregnation, temporary sealing and pre-charge may be carried out again.

Then, regular sealing is carried out. Thereafter, the surface of the container can be made uniform by rolling.

Then, the battery is charged; and then in the charged state, the battery is allowed to stand in a heated state (for example, 35 to 55 °C, preferably 40 to 50 °C) for a predetermined time (for example, 7 days or longer, preferably 7 to 30 days, more preferably 10 to 25 days) to carry out aging. During the aging treatment, additives contained in the electrolyte solution can form a film on the electrode surface, which can contribute to the improvement of the battery characteristics.

Thereafter, the battery is discharged and, as required, subjected to charge and discharge treatment (RtRc treatment), whereby a desired battery can be obtained.

Hereinafter, the constitution of the lithium-ion secondary battery will be further described as an example of the laminated type battery.

### (Negative electrode)

The negative electrode preferably has a structure containing a current collector and a negative electrode active material layer formed on the current collector. The negative electrode active material layer contains a negative electrode active material and a binder, and it is preferable, from the viewpoint of raising the conductivity, that the negative electrode active material contains a conductive auxiliary agent.

The negative electrode active material is not especially limited as long as being an active material for negative electrodes capable of intercalating and deintercalating lithium ions, but carbonaceous materials can be used. The carbonaceous materials include graphite, amorphous carbon (for example, graphitizable carbon and non- graphitizable carbon), diamondlike carbon, fullerene, carbon nanotubes and carbon nanohorns. As the graphite, natural graphite and artificial graphite can be used, and from the viewpoint of material costs, inexpensive natural graphite is preferable. Examples of the amorphous carbon include heat-treated coal pitch coke, petroleum pitch coke, acetylene pitch coke and the like. As other negative electrode active materials, there can be used lithium metal materials, alloy materials of silicon, tin or the like, oxide materials such as Nb₂O₅ and TiO₂, and composite materials thereof.

The average particle diameter of the negative electrode active material is, from the viewpoint of suppressing side-reactions in charging and discharging to suppress the reduction of the charge and discharge efficiency, preferably 2 µm or larger and more preferably 5 µm or larger, and from the viewpoint of input and output characteristics and from the viewpoint regarding the electrode fabrication (smoothness of the electrode surface, and the like), preferably 40 µm or smaller and more preferably 30 µm or smaller. Here, the average particle diameter means a particle diameter (median diameter: D₅₀) at a cumulative value of 50% in a particle size distribution (in terms of volume) by a laser diffraction scattering method.

Fabrication of the negative electrode involves applying a slurry containing a negative electrode active material, a binder, a solvent and as required, a conductive auxiliary agent on a negative electrode current collector, and drying and as required, pressing the resultant to form a negative electrode active material layer, whereby the negative electrode (the current collector and the negative electrode active material layer thereon) can be obtained. Methods of applying the negative electrode slurry include a doctor blade method, a die coater method and a dip coating method. To the slurry, as required, additives such as a defoaming agent and a surfactant may be added.

The content rate of the binder in the negative electrode active material layer is, from the viewpoint of the binding power and the energy density, which are in a trade-off relation, as a content rate to the negative electrode active material, preferably in the range of 0.5 to 30% by mass, more preferably in the range of 0.5 to 20% by mass and still more preferably in the range of 1 to 15% by mass.

As the solvent, there can be used an organic solvent such as N-methyl-2-pyrrolidone (NMP) or water. In the case of using an organic solvent as the solvent, there can be used a binder for the organic solvent, such as polyvinylidene fluoride (PVDF). In the case of using water as the solvent, there can be used a rubber-based binder (for example, SBR (styrenebutadiene rubber) or an acrylic binder. As such an aqueous binder, one in an emulsion form can be used. In the case of using water as the solvent, the aqueous binder and a thickener such as CMC (carboxymethylcellulose) are preferably used in combination.

The negative electrode active material layer, as required, may contain the conductive auxiliary agent. As the conductive auxiliary agent, there can be used conductive materials being usually used as conductive auxiliary agents for negative electrodes, including carobonaceous materials such as carbon black, Ketjen black and acetylene black. The content of the conductive auxiliary agent in the negative electrode active material layer is, as a content rate to the negative electrode active material, preferably in the range of 0.1 to 3.0% by mass. The content rate of the conductive auxiliary agent to the negative electrode active material is, from the viewpoint of forming enough conductive passages, preferably 0.1% by mass or higher and more preferably 0.3% by mass or higher, and from the viewpoint of suppressing the gas generation and the decrease in the delamination strength due to the decomposition of the electrolyte solution caused by excessive addition of the conductive auxiliary agent, preferably 3.0% by mass or lower and more preferably 1.0% by mass or lower.

The average particle diameter (primary particle diameter) of the conductive auxiliary agent is preferably in the range of 10 to 100 nm. The average particle diameter (primary particle diameter) of the conductive auxiliary agent is, from the viewpoint of suppressing excessive aggregation of the conductive auxiliary agent and dispersing homogeneously the conductive auxiliary agent in the negative electrode, preferably 10 nm or larger and more preferably 30 nm or larger, and from the viewpoint that a sufficient number of contact points can be formed and good conductive passages are formed, preferably 100 nm or smaller and more preferably 80 nm or smaller. The conductive auxiliary agent, in the case of being in a fibrous form, includes ones of 2 to 200 nm in average particle diameter and 0.1 to 20 µm in average fiber length.

Here, the average particle diameter of the conductive auxiliary agent means a particle diameter (median diameter: D₅₀) at a cumulative value of 50% in a particle size distribution (in terms of volume) by a laser diffraction scattering method.

As the negative electrode current collector, there can be used copper, stainless steel, nickel, titanium or an alloy thereof. The shape thereof includes foil-, flat plate- and mesh forms.

### (Positive electrode)

The positive electrode active material is not especially limited, and for example, a lithium composite oxide having a layered rock salt structure or a spinel-type structure, or an iron lithium phosphate having an olivine-type structure can be used. The lithium composite oxide includes lithium manganate (LiMn₂O₄); lithium cobaltate (LiCoO₂); lithium nickelate (LiNiO₂); compounds made by substituting at least a part of manganese, cobalt and nickel of these lithium compounds by other metal elements such as aluminum, magnesium, titanium and zinc; nickel-substituted lithium manganate made by substituting a part of manganese of the lithium manganate by at least nickel; cobalt-substituted lithium nickelate made by substituting a part of nickel of the lithium nickelate by at least cobalt; compounds made by substituting a part of manganese of the nickel-substituted lithium manganate by other metals (at least one of, for example, aluminum, magnesium, titanium and zinc); and compounds made by substituting a part of nickel of the cobalt-substituted lithium nickelate by other metal elements (at least one of, for example, aluminum, magnesium, titanium, zinc and manganese). These lithium composite oxides may be used singly or as a mixture of two or more.

Lithium-containing composite oxides having a layered crystal structure include lithium nickel-containing composite oxides. Compounds made by substituting a part of nickel at nickel sites of the lithium nickel-containing composite oxides by other metals can be used. Examples of the metals other than nickel occupying the nickel sites include at least one metal selected from the group consisting of Mn, Co, Al, Mg, Fe, Cr, Ti and In.

The lithium nickel-containing composite oxide preferably contains Co as the metal other than nickel occupying the nickel sites. The lithium nickel-containing composite oxide more preferably contains, in addition to Co, further Mn or Al, that is, there can suitably be used a lithium nickel cobalt manganese composite oxide (NCM) having a layered crystal structure, a lithium nickel cobalt aluminum composite oxide (NCA) having a layered crystal structure, or a mixture thereof.

As the lithium nickel-containing composite oxide having a layered crystal structure, for example, a compound represented by the following formula can be used.

Li₁₊ₐ(Ni_{b}Co_{c}Me1_{d}Me2_{1-b-c-d})O₂

wherein Me1 is Mn or Al; Me2 is at least one selected from the group consisting of Mn, Al, Mg, Fe, Cr, Ti, and In (excluding the same metal as Me1); and -0.5 ≤ a < 0.1, 0.1 ≤ b < 1,0 < c < 0.5, and 0 < d <0.5).

The average particle diameter of the positive electrode active material is, from the viewpoint of the reactivity with an electrolyte solution, the rate characteristics and the like, for example, preferably 0.1 to 50 µm, more preferably 1 to 30 µm and still more preferably 2 to 25 µm. Here, the average particle diameter means a particle diameter (median diameter: D₅₀) at a cumulative value of 50% in a particle size distribution (in terms of volume) by a laser diffraction scattering method.

The positive electrode is constituted of a positive electrode current collector and a positive electrode active material layer on the positive electrode current collector. The positive electrode is arranged so that the active material layer faces the negative electrode active material layer on the negative electrode current collector through a separator.

The positive electrode active material layer can be formed as follows. The positive electrode active material layer can be formed by first preparing a slurry containing a positive electrode active material, a binder and a solvent (further as required, a conductive auxiliary agent), applying the slurry on a positive electrode current collector, and drying the resultant and as required pressing the resultant. As the slurry solvent to be used in fabrication of the positive electrode, N-methyl-2-pyrrolidone (NMP) can be used.

As the binder, one being usually used as a binder for positive electrodes, such as polytetrafluoroethylene (PTFE) and polyvinylidene fluoride (PVDF) can be used.

The positive electrode active material layer can contain, besides the positive electrode active material and the binder, a conductive auxiliary agent. The conductive auxiliary agent is not especially limited, and there can be used conductive materials being usually used as conductive auxiliary agents for positive electrodes, including carbonaceous materials such as carbon black, acetylene black, natural graphite, artificial graphite and carbon fibers.

A higher proportion of the positive electrode active material in the positive electrode active material layer is better because the capacity per mass becomes higher, but addition of a conductive auxiliary agent is preferable from the viewpoint of the resistance reduction of the electrode; and addition of a binder is preferable from the viewpoint of the electrode strength. When the proportion of the conductive auxiliary agent is too low, it becomes difficult for a sufficient conductivity to be retained, and it becomes easy to lead to the increase of the electrode resistance. When the proportion of the binder is too low, it becomes difficult for the adhesive power of the current collector, the active material and the conductive auxiliary agent to be retained and the electrode delamination is caused in some cases. From the above viewpoints, the content of the conductive auxiliary agent in the active material layer is preferably 1 to 10% by mass; and the content of the binder in the active material layer is preferably 1 to 10% by mass.

As the positive electrode current collector, aluminum, stainless steel, nickel, titanium or an alloy thereof can be used. The shape thereof includes foil-, flat plate- and mesh forms. Particularly an aluminum foil can suitably be used.

### (Electrolyte solution)

As the electrolyte solution, a nonaqueous electrolyte solution in which a lithium salt is dissolved in one or two or more nonaqueous solvents can be used.

The nonaqueous solvents include cyclic carbonates such as ethylene carbonate (EC), propylene carbonate (PC), butylene carbonate (BC) and vinylene carbonate (VC); chain carbonates such as dimethyl carbonate (DMC), diethyl carbonate (DEC), ethyl methyl carbonate (EMC) and dipropyl carbonate (DPC); aliphatic carboxylate esters such as methyl formate, methyl acetate and ethyl propionate; γ-lactones such as γ-butyrolactone; chain ethers such as 1,2-ethoxyethane (DEE) and ethoxymethoxyethane (EME); and cyclic ethers such as tetrahydrofuran and 2-methyltetrahydrofuran. These nonaqueous solvents can be used singly or as a mixture of two or more.

The lithium salt to be dissolved in the nonaqueous solvent is not especially limited, and examples thereof include LiPF₆, LiAsF₆, LiAlCl4, LiClO₄, LiBF₄, LiSbF₆, LiCF₃SO₃, LiCF₃CO₂, Li(CF₃SO₂)₂, LiN(CF₃SO₂)₂ and lithium bisoxalatoborate. These lithium salts can be used singly or in a combination of two or more. The lithium salt may further contain a polymer component as a nonaqueous electrolyte. The concentration of the lithium salt can be set in the range of 0.8 to 1.2 mol/L, and is preferably 0.9 to 1.1 mol/L.

### (Additives)

The electrolyte solution preferably contains compounds being usually used as additives for nonaqueous electrolyte solutions. Examples of the additives include carbonate-based compounds such as vinylene carbonate and fluoroethylene carbonate; acid anhydrides such as maleic anhydride; boron-based additives such as borate esters; sulfite-based compounds such as ethylene sulfite; cyclic monosulfonate esters such as 1,3-propanesultone, 1,2-propanesultone, 1,4-butanesultone, 1,2-butanesultone, 1,3-butanesultone, 2,4-butanesultone and 1,3-pentanesultone; and cyclic disulfonate ester compounds such as methylene methanedisulfonate (1,5,2,4-dioxadithiane-2,2,4,4-tetraoxide) and ethylene methanedisulfonate. These additives may be used singly or concurrently in two or more. Particularly from the viewpoint that a film can be more effectively formed on the positive electrode surface and battery characteristics can be improved, cyclic sulfonate ester compounds are preferable, and cyclic disulfonic acid compounds are preferable.

The content of the additives in the electrolyte solution is, from the viewpoint of suppressing increases in the viscosity and the resistance of the electrolyte solution and simultaneously providing a sufficient addition effect, preferably 0.01 to 10% by mass and more preferably 0.1 to 5% by mass.

### (Outer package container)

As the outer package container, a case composed of a flexible film, a can case or the like can be used, and from the viewpoint of weight reduction of the battery, use of a flexible film is preferable.

As the flexible film, one in which resin layers are provided on the front and back surfaces of a metal layer becoming a substrate can be used. As the metal layer, there can be selected one having a barrier property including prevention of the leaking-out of the electrolyte solution and the penetration of moisture from the outside, and aluminum, stainless steel and the like can be used. At least on one surface of the metal layer, a thermally fusible resin layer such as a modified polyolefin is provided. The outer package container is formed by making the thermally fusible resin layers of the flexible films to face each other and thermally fusing the circumference of the part accommodating the electrode laminate. On the surface side of the outer package, which is the surface side of the flexible film on the opposite side to the surface side on which the thermally fusible resin layer is formed, a resin layer such as a nylon film or a polyester film can be provided.

### Examples

### (Example 1)

There were provided 21 sheets of positive electrode sheets in which positive electrode active material layers were formed on both surfaces of a current collector, 22 sheets of negative electrode sheets in which negative electrode active material layers were formed on both surfaces of a current collector, and 42 sheets of aramid separator sheets, in an environment of a relative humidity (RH) of 1% or lower. The following formation step of batteries was carried out also in an environment of a relative humidity (RH) of 1% or lower.

The size and shape of each sheet was as follows.
Size of the positive electrode sheet: 216.4 mm × 193.8 mm (rectangular)
Size of the negative electrode sheet: 220.4 mm × 197.8 mm (rectangular)
Size of the aramid separator sheet: 222.4 mm × 199.8 mm (rectangular), 15 µm in thickness

The positive electrode sheets and the negative electrode sheets were obtained, respectively, as described before, by applying and drying slurries containing active materials on the current collectors to thereby form the active material layers, and cutting the resultants into the above sizes. The active material layers were formed on both surfaces of the current collectors.

The separator sheets were unwound from one provided in a roll state, and cut into the above size. The separator sheets were, at least right before lamination, subjected to a charge neutralization treatment by an ionizer. At this time, the charge voltage of each sheet was measured by using a static electricity meter, manufactured by Keyence Corp., and distributed locally in the range of 0 to 5.0 kV and was in the range of 0.5 to 1.0 kV on the average. Here, the average of the charge voltage was determined to be an average value of the charge voltages at any 10 points including the center of each sheet (the center point and any 9 points in its circumference) in each sheet.

On the other hand, the charge voltage of each separator sheet before the charge neutralization distributed locally in the range of 10 to 40 kV, and was about 15 kV on the average. The relative dielectric constant of the separator sheet (aramid separator) used was 3.7.

The separator sheet having been subjected to the charge neutralization treatment was laminated on a negative electrode sheet arranged before, and a positive electrode sheet was laminated on the separator sheet. Then, a separator sheet was laminated on the laminated positive electrode sheet, and then, a negative electrode sheet was laminated on the separator sheet. In such a manner, a negative electrode sheet, a separator sheet and a positive electrode sheet were repeatedly laminated so that the separator sheet was arranged between the positive electrode sheet and the negative electrode sheet to thereby form an electrode laminate containing a predetermined number of electrode pairs.

For the obtained electrode laminate, as shown in Figure 2, positive electrode active material-unapplied portions (ends of positive electrode current collectors) of the positive electrode sheets were used as positive electrode tabs, and collected on a positive electrode terminal and mutually connected by ultrasonic welding or the like. Negative electrode active material-unapplied portions (ends of negative electrode current collectors) of the negative electrode sheets were used as negative electrode tabs, and collected on a negative electrode terminal and mutually connected by ultrasonic welding or the like.

### (Example 2)

In Example 2, bag-form separators shown in Figure 3(A) as the separator were fabricated (one bag-form separator was fabricated from 2 sheets of the aramid separator sheets), and one positive electrode sheet was housed in each bag-form separator. In this case, by alternately laminating 22 sheets of the negative electrode sheets and 21 sheets of the bag-form separators housing the positive electrode sheets (the 21 sheets corresponded to 42 sheets of the separator sheets, one bag-form separator housed one positive electrode sheet), an electrode laminate was formed.

Here, in Example 1, the positive electrode tabs and the negative electrode tabs were arranged separately on both sides as shown in Figure 2, but in Example 2, a positive electrode tab and a negative electrode tab were both arranged on one side as shown in Figure 4(A). The other procedures were carried out similarly to in Example 1 to thereby fabricate the electrode laminate.

By using the electrode laminates formed in the laminating methods in Examples 1 and 2, laminated lithium-ion secondary batteries can be fabricated. As described before, the electrode laminate is housed in an outer package container composed of aluminum laminate films (outer packages); then, an electrolyte solution is placed; and thereafter, vacuum impregnation is carried out. After the vacuum impregnation, the non-fused opening part of the outer packages is fused and temporarily sealed in a vacuum state. Pre-charge is carried out in the temporarily sealed state. After the temporarily sealed part is unsealed to carry out degassing, regular sealing and aging are carried out, whereby the laminated lithium-ion secondary batteries can be obtained.

In the formation step of the electrode laminate in the above production process, if no charge neutralization treatment of the separator sheet is carried out, the separator sheet ends in being attracted and adsorbed by a strong electrostatic force in the course of the separator sheet (or bag-form separator) being brought to a target lamination position on the electrode sheet (positive electrode sheet or negative electrode sheet), making it impossible for the separator sheet to be peeled off. If peeling off the separator sheet (or bag-form separator) is tried, the position of the electrode sheet laminated before ends in being shifted. Further the separator sheets (or bag-form separators) before the lamination are stuck to each other, making it difficult for the separator sheets (or bag-form separators) to be peeled off. By contrast, in Examples, since the separator was subjected to the charge neutralization treatment and reduced in the charge voltage, there arose no problems of sticking thereof in laminating due to the electrostatic force and the positional shift, and the electrode laminates could be formed smoothly.

Then, if no charge neutralization treatment of the separator is carried out, the electrostatic breakdown is liable to be caused, but in Examples, since the separator was subjected to the charge neutralization and reduced in the charge voltage, no scorches due to the electrostatic breakdown of the separator were visually observed and the electrode laminates could be formed without electrostatic breakdown.

On the other hand, if the separator sheet (or bag-form separator) is subjected to the charge neutralization treatment such that the charge voltage thereof becomes 0 kV, after the separator sheet (or bag-form separator) is placed on a target lamination position on an electrode sheet and allowed to stand still, the positional shit is caused due to the flow of air (breath or wind) in some cases. Further when an electrode sheet is placed on the separator sheet (or bag-form separator), and resetting is tried, the separator sheet (or bag-form separator) also causes a positional shift due to the frictional force at this time in some cases. In the present Examples, since the separator was subjected to moderate charge neutralization to leave a charge voltage of about 0.5 to 1.0 kV, a moderate electrostatic force was generated and such a positional shift could be prevented.

In the foregoing, the present invention has been described with reference to the exemplary embodiments and Examples; however, the present invention is not limited to the exemplary embodiments and Examples. Various modifications understandable to those skilled in the art may be made in the constitution and details of the present invention within the scope thereof.

The present application claims the right of priority based on Japanese Patent Application No. 2017-012259 filed on January 26, 2017, the disclosure of which is incorporated herein in its entirety by reference.

### Reference Signs List

### (Reference signs list of Figure 1)

- 1: positive electrode active material layer
- 2: negative electrode active material layer
- 3: positive electrode current collector
- 4: negative electrode current collector
- 5: separator
- 6: laminate outer package
- 7: laminate outer package
- 8: negative electrode tab
- 9: positive electrode tab

### (Reference signs list of Figure 2)

- 201: positive electrode
- 202: positive electrode active material-applied portion
- 203: positive electrode tab
- 204: boundary portion
- 206: negative electrode
- 207: negative electrode active material-applied portion
- 208: negative electrode tab
- 211: positive electrode terminal
- 216: negative electrode terminal
- 220: separator
- 230: outer package case (flexible film)

### (Reference signs list of Figures 3 and 4)

- 1: laminated type battery
- 115: positive electrode leading-out tab
- 200: negative electrode
- 215: negative electrode leading-out tab
- 300: bag-form separator
- 320: first-face separator
- 330: second-face separator
- 340A: bottom-side thermally fused portion
- 350A, 350B: both-side thermally fused portions
- 360: electrode inserting port
- 370: flank-side
- 400: laminate
- 500: film-form outer package material
- 510: sealed part

## Claims

1. A method for producing a laminated type battery comprising a separator and electrode sheets arranged in lamination through the separator, the method comprising:
subjecting a charged separator to a charge neutralization treatment to thereby reduce a charge voltage thereof; and
laminating the separator having the reduced charge voltage on the electrode sheet.

2. The method according to claim 1, comprising a step of laminating another electrode sheet on the separator having the reduced charge voltage.

3. The method according to claim 1 or 2, wherein the charge voltage of the separator having the reduced charge voltage is lower than 10 kV.

4. The method according to claim 3, wherein the charge voltage of the separator having the reduced charge voltage is at least 0.5 kV.

5. The method according to any one of claims 1 to 4, wherein the separator has a relative dielectric constant of 3 or higher.

6. The method according to any one of claims 1 to 5, wherein the separator is an aramid separator or a glass nonwoven fabric separator.

7. The method according to any one of claims 1 to 5, wherein the separator is an aramid separator.

8. The method according to any one of claims 1 to 7, wherein the charge neutralization treatment is carried out by using an ionizer.

9. The method according to any one of claims 1 to 8, wherein the charged separator before the charge neutralization treatment is a separator having been placed in a dry atmosphere having a relative humidity of 5% or lower.

10. The method according to any one of claims 1 to 9, wherein the charged separator before the charge neutralization treatment is a separator having been unwound from a rolled state and having been cut.

11. The method according to any one of claims 1 to 9, wherein the charged separator before the charge neutralization treatment is a separator having been peeled off from a laminated state.

12. The method according to any one of claims 1 to 11, wherein the laminating is carried out in a dry atmosphere having a relative humidity of 5% or lower.

13. The method according to any one of claims 1 to 12, wherein the laminated type battery is a lithium-ion secondary battery.
